# EUROPEAN PATENT SPECIFICATION

(11) **EP 1 866 343 B1**
(45) Date of publication and mention of the grant of the patent: **29.09.2010**
(21) Application number: 06725315.3
(22) Date of filing: 27.03.2006
(51) Int. Cl.: C08F 293/00

(54) **PROCESS FOR THE PREPARATION OF STAR AND BLOCK-COPOLYMERS VIA EPOXY-FUNCTIONALIZED ALKOXYAMINES**
VERFAHREN ZUR HERSTELLUNG VON STERN- UND BLOCKCOPOLYMEREN ÜBER EPOXIDFUNKTIONELLE ALKOXYAMINE
PROCEDE DE PREPARATION DE COPOLYMERES EN ETOILE ET SEQUENCES AU MOYEN D'ALCOXYAMINES A FONCTIONNALISATION EPOXYDE

(30) Priority: 04.04.2005 EP 05102621
(43) Date of publication of application: 19.12.2007
(73) Proprietor: BASF SE, 67056 Ludwigshafen (DE)
(72) Inventor: FINK, Jochen, 69226 Nussloch (DE); PFAENDNER, Rudolf, 64668 Rimbach (DE); KRAMER, Andreas, CH-3280 Meyriez (CH); FUSO, Francesco, CH-4106 Therwil (CH)
(86) International application number: PCT/EP2006/061045
(87) International publication number: WO 2006/106048

(56) References cited:
- WO-A-01/02345
- WO-A-02/48109
- WO-A-2004/022617

## Description

The instant invention relates to a process for the preparation of star and block-copolymers, which are prepared by controlled free radical polymerization using epoxy-functionalized alkoxyamines and multifunctional compounds capable of reacting with the epoxy group.

Well-defined star polymers are typically prepared by various living polymerization techniques. There are three basic synthesis routes for star polymers. One is the so called core-first method, which uses a multifunctional initiator to initiate the polymerization of monomers, whereby the number of arms is determined by the number of initiating sites on the initiator molecule. This is for example described by J. Ueda, M. Kamigaito, M. Sawamoto; Macromolecules 31; 6762 (1998).

WO 0102345 discloses a process for the preparation of star polymers using multifunctional alkoxyamine initiators.

The arm-first technique involves the synthesis of preformed arms, usually through living polymerization, followed by reaction with a multifunctional linking agent as for example described by S.Kannaoka, M. Sawamoto, T. Higashimura; Macromolecules 24; 2309 (1991) and by R.T.A. Mayadunne, J. Jeffery, G. Moad, E. Rizzardo; Macromolecules 36; 1505 (2003).

The third method is a slight variation of the arm-first technique, which sometimes is also termed the "nodule" method. In this method, the reactive macroinitiator (arms) produced by a living polymerization technique are cross-linked by a divinyl reagent to form star polymers, as for example described by X. Zhang, J.H. Xia, K. Matyjaszewski; Macromolecules 33, 2340 (2000).

A further approach is the grafting of epoxy-terminated oligomers onto functionalized polymers leading also to star and comb-copolymers, as for example disclosed in WO 04/069887.

It has now been found that starting with epoxy-functional alkoxyamines it is possible to firstly polymerize ethylenically unsaturated monomers in a controlled way and thereby introducing the reactive epoxy group into the polymer backbone. In a second step the epoxy group can be reacted with selected multifunctional compounds in a polymer analogous reaction, giving finally highly branched star polymers. It is, however, also possible to firstly react the epoxy-functional alkoxyamines with a multifunctional compound thereby introducing branching in the first reaction step. As a second step controlled radical polymerization in the presence of an ethylenically unsaturated monomer can be carried out. In both cases a broad range of highly branched star polymers is accessible.

Star branched copolymers of narrow molecular weight distribution have unique rheological properties and behave significantly different from linear polymer melts. These differences in the mechanical and solubility properties are due to different dynamics of star (co)polymers compared to their linear counterparts. Star-shaped polymers may serve as surface-active agents, compatibilizers, thermoplastic elastomers, materials for shaping parts and emulsifiers.

One aspect of the invention is a method for the preparation of a star polymer or copolymer comprising
**a1)** polymerising in a first step an ethylenically unsaturated monomer in the presence of an initiator compound of formula (I) 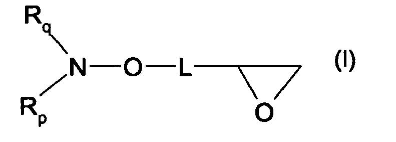
   wherein L is a linking group selected from the group consisting of C₁-C₁₈alkylene, phenylene, phenylene-C₁-C₁₈alkylene, C₁-C₁₈alkylene-phenylene, C₁-C₁₈alkylene-phenylene-oxy and C₅-C₁₂cycloalkylene;
   Rₚ and R_{q} are independently tertiary bound C₄-C₂₈alkyl groups which are unsubstituted or substitituted by one or more electron withdrawing groups or by phenyl; or
   Rₚ and R_{q} together form a 5 or 6 membered heterocyclic ring which is substituted at least by 4 C₁-C₄alkyl groups and which may be interrupted by a further nitrogen or oxygen atom; and in a second step
**b1)** reacting the polymer obtained in step a) with a compound of formula R₁(X)ₙ , wherein R₁ is C₁-C₂₄alkyl, C₅-C₁₂cycloalkyl, phenyl, naphthyl, C₇-C₁₅phenylalkyl or is the residue of a phosphor containing acid;
   X is OH,-COOH, -COCI, NH₂, -NHR, 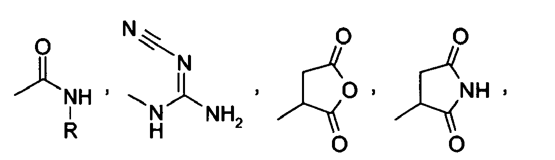 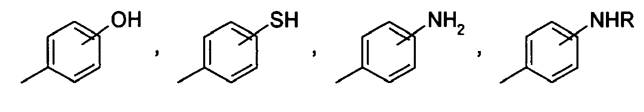 or
   X is a radical derived from glycerol or from a polyvinylalcohol
   R is C₁-C₂₄alkyl and n is a number from 3-10;
      or
**a2)** reacting in a first step a compound of formula I with a compound of formula R(X)ₙ as defined above, and
**b2)** reacting the multifunctional initiator compound, obtained in step a2) with an ethylenically unsaturated monomer in a polymerization reaction.

For example the compound of formula (I) is of formula (II) 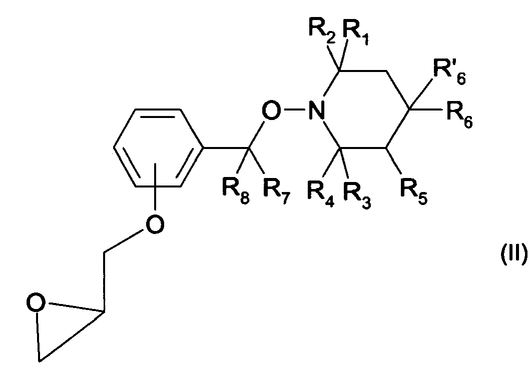 wherein
R₁, R₂, R₃ and R₄ are independently of each other C₁-C₄alkyl;
R₅ is hydrogen or C₁-C₄alkyl ;
R'₆ is hydrogen and R₆ is H, OR₁₀, NR₁₀R₁₁, -O-C(O)-R₁₀ or NR₁₁C(O)-R₁₀;
R₁₀ and R₁₁ independently are hydrogen, C₁-C₁₈alkyl, C₂-C₁₈alkenyl, C₂-C₁₈alkinyl or C₂-C₁₈alkyl which is substituted by at least one hydroxy group or, if R₆ is NR₁₀R₁₁, taken together, form a C₂-C₁₂alkylene bridge or a C₂-C₁₂-alkylene bridge interrupted by at least one O atom;or
R₆ and R'₆ together are both hydrogen, a group =O or =N-O-R₂₀ wherein
R₂₀ is H, straight or branched C₁-C₁₈alkyl, C₃-C₁₈alkenyl or C₃-C₁₈alkinyl, which may be unsubstituted or substitued, by one or more OH, C₁-C₈alkoxy, carboxy, C₁-C₈alkoxycarbonyl; C₅-C₁₂cycloalkyl or C₅-C₁₂cycloalkenyl;
phenyl, C₇-C₉phenylalkyl or naphthyl which may be unsubstituted or substituted by one or more C₁-C₈alkyl, halogen, OH, C₁-C₈alkoxy, carboxy, C₁-C₈alkoxycarbonyl;
-C(O)-C₁-C₃₆alkyl, or an acyl moiety of a α,β-unsaturated carboxylic acid having 3 to 5 carbon atoms or of an aromatic carboxylic acid having 7 to 15 carbon atoms;
-SO₃⁻Q⁺, -PO(O⁻Q⁺)₂, -P(O)(OR ₂)₂, -SO₂-R₂, -CO-NH-R₂, -CONH₂, COOR₂, or Si(Me)₃, wherein Q⁺ is H⁺, ammnonium or an alkali metal cation; or
R₆ and R₆' are independently -O-C₁-C₁₂alkyl, -O-C₃-C₁₂alkenyl, -O-C₃-C₁₂alkinyl, -O-C₅-C₈cycloalkyl, -O-phenyl, -O-naphthyl, -O-C₇-C₉phenylalkyl; or
R₆ and R'₆ together form one of the bivalent groups -O-C(R₂₁)(R₂₂)-CH(R₂₃)-O-, -O-CH(R₂₁)-CH₂₂-C(R₂₂)(R₂₃)-O-, -O-CH(R₂₂)-CH₂-C(R₂₁)(R₂₃)-O-, -O-CH₂-C(R₂₁)(R₂₂)-CH(R₂₃)-O-, -O-o-phenylene-O-, -O-1,2-cyclohexyliden-O-,
-O--CH₂-CH=CH-CH₂-O- or 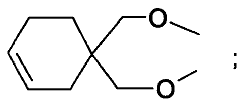 wherein
R₂₁ is hydrogen, C₁-C₁₂alkyl, COOH, COO-(C₁-C₁₂)alkyl or CH₂OR₂₄;
R₂₂ and R₂₃ are independently hydrogen, methyl ethyl, COOH or COO-(C₁-C₁₂)alkyl;
R₂₄ is hydrogen, C₁-C₁₂alkyl, benzyl, or a monovalent acyl residue derived from an aliphatic, cycloaliphatic or aromatic monocarboxylic acid having up to 18 carbon atoms; and
R₇ and R₈ are independently hydrogen or C₁-C₁₈alkyl.

C₁-C₁₈alkyl can be linear or branched. Examples are methyl, ethyl, propyl, isopropyl, butyl, 2-butyl, isobutyl, t-butyl, pentyl, 2-pentyl, hexyl, heptyl, octyl, 2-ethylhexyl, t-octyl, nonyl, decyl, undecyl, dodecyl or octadecyl. Where up to C₃₆alkyl is possible, C₁-C₁₈alkyl is preferred.

Alkyl substituted by a group -COOH is for example CH₂-COOH, CH₂-CH₂-COOH, (CH₂)₃-COOH or CH₂-CHCOOH-CH₂-CH₃

Hydroxyl- or alkoxycarbonyl substituted C₁-C₁₈alkyl can be, for example, 2-hydroxyethyl, 2-hydroxypropyl, methoxycarbonylmethyl or 2-ethoxycarbonylethyl.

Alkenyl having from 2 to 18 carbon atoms is a branched or unbranched radical, for example propenyl, 2-butenyl, 3-butenyl, isobutenyl, n-2,4-pentadienyl, 3-methyl-2-butenyl, n-2-octenyl, n-2-dodecenyl, isododecenyl.

Alkinyl having from 2 to 18 carbon atoms is a branched or unbranched radical, for example propinyl, 2-butinyl, 3-butinyl, isobutinyl, n-2,4-pentadiinyl, 3-methyl-2-butinyl, n-2-octinyl, n-2-dodecinyl, isododecinyl.

Examples of alkoxy are methoxy, ethoxy, propoxy, isopropoxy, butoxy, isobutoxy, pentoxy, isopentoxy, hexoxy, heptoxy or octoxy.

C₇-C₉phenylalkyl is for example benzyl, α-methylbenzyl, α,α-dimethylbenzyl or 2-phenylethyl, benzyl is preferred.

C₅-C₁₂cycloalkyl is for example cyclopentyl, cyclohexyl, cycloheptyl, methylcyclopentyl or cyclooctyl.

C₅-C₁₂cycloalkenyl is for example 3-cyclopentenyl, 3-cyclohexenyl or 3-cycloheptenyl.

Examples of a monocarboxylic acid having up to 18 carbon atoms are formic acid, acetic acid, propionic acid, the isomers of valeric acid, methyl ethyl acetic acid, trimethyl acetic acid, capronic acid, lauric acid or stearic acid. Examples for unsaturated aliphatic acids are acrylic acid, methacrylic acid, crotonic acid, linolic acid and oleic acid.

Typical examples of cycloaliphatic carboxylic acids are cyclohexane carboxylic acid or cyclopentane carboxylic acid.

Examples of aromatic carboxylic acids are benzoic acid, salicylic acid or cinnamic acid.

Halogen is F, Cl, Br or I.

C₁-C₁₈alkylene is a branched or unbranched radical, for example methylene, ethylene, propylene, trimethylene, tetramethylene, pentamethylene, hexamethylene, heptamethylene, octamethylene, decamethylene or dodecamethylene.

C₂-C₁₂alkylene bridges interrupted by at least one O atom are, for example, -CH₂-O-CH₂-CH₂, -CH₂-O-CH₂-CH₂-CH₂, -CH₂-O-CH₂-CH₂-CH₂-CH₂-, -CH₂-O-CH₂-CH₂-O-CH₂-.

Alkoxycarbonyl is for example methoxycarbonyl, ethoxycarbonyl, propoxycarbonyl.

For instance R₁, R₂, R₃, R₄ are methyl, or R₁ and R₃ are ethyl and R₂ and R₄ are methyl, or R₁ and R₂ are ethyl and R₃ and R₄ are methyl.

For example R₅ is hydrogen or methyl.

Preferably R'₆ is hydrogen and R₆ is H, OR₁₀, NR₁₀R₁₁, -O-C(O)-R₁₀ or NR₁₁-C(O)-R₁₀;
R₁₀ and R₁₁ independently are hydrogen, C₁-C₁₈alkyl, C₂-C₁₈alkenyl, C₂-C₁₈alkinyl or C₂-C₁₈alkyl which is substituted by at least one hydroxy group or, if R₆ is NR₁₀R₁₁, taken together, form a C₂-C₁₂alkylene bridge or a C₂-C₁₂-alkylene bridge interrupted by at least one O atom; or
R₆ and R'₆ together are both hydrogen, a group =O or =N-O-R₂₀ wherein
R₂₀ is H or straight or branched C₁-C₁₈alkyl.

In another preferred embodiment R₆ and R'₆ together form one of the bivalent groups -O-C(R₂₁)(R₂₂)-CH(R₂₃)-O-, -O-CH(R₂₁)-CH₂₂-C(R₂₂)(R₂₃)-O-, -O-CH(R₂₂)-CH₂-C(R₂₁)(R₂₃)-O-, - O-CH₂-C(R₂₁)(R₂₂)-CH(R₂₃)-O- and R₂₁, R₂₂ and R₂₃ have the meaning as defined above.

Specific compounds are given in Table A

**Table A**

| Compound Number | Structure |
|---|---|
| 101 | 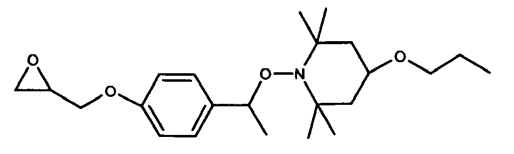 |
| 102 | 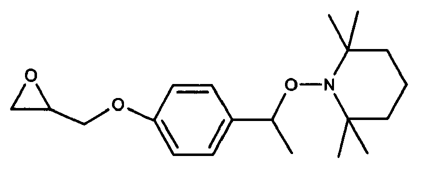 |
| 103 | 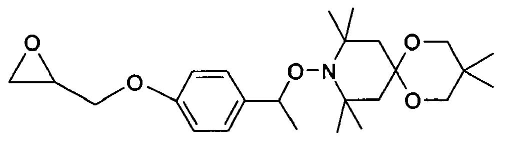 |
| 104 | 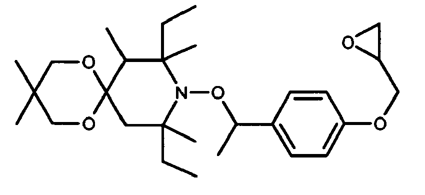 |
| 105 | 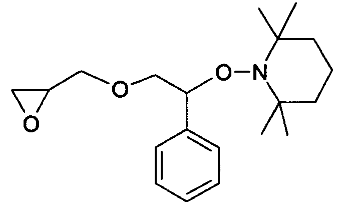 |

The compounds of formula II and in particular the compounds given in Table A are known and may be prepared as described in WO 99/46261, WO 02/48109 or US 5 721 320.

For example the ethylenically unsaturated monomer or oligomer is selected from the group consisting of styrene, substituted styrene, conjugated dienes, vinyl acetate, vinylpyrrolidone, vinylimidazole, maleic anhydride, (alkyl)acrylic acidanhydrides, (alkyl)acrylic acid salts, (alkyl)acrylic esters, (meth)acrylonitriles, (alkyl)acrylamides, vinyl halides and vinylidene halides.

In particular the ethylenically unsaturated monomers are styrene, methylacrylate, ethylacrylate, butylacrylate, isobutylacrylate, tert. butylacrylate, hydroxyethylacrylate, hydroxy-propylacrylate, dimethylaminoethylacrylate, methyl(meth)acrylate, ethyl(meth)acrylate, butyl(meth)acrylate, hydroxyethyl(meth)acrylate, hydroxypropyl(meth)acrylate, dimethylaminoethyl(meth)acrylate, acrylonitrile, acrylamide, methacrylamide or dimethylaminopropyl-methacrylamide.

Particularly the ethylenically unsaturated monomers are isoprene, 1,3-butadiene, α-C₅-C₁₈alkene, styrene, α-methyl styrene, p-methyl styrene or a compound of formula CH₂=C(Rₐ)-(C=Z)-R_{b}, wherein Rₐ is hydrogen or C₁-C₄alkyl, R_{b} is NH₂, O⁻(Me⁺), glycidyl, unsubstituted C₁-C₁₈alkoxy, C₂-C₁₀₀alkoxy interrupted by at least one N and/or O atom, or hydroxy-substituted C₁-C₁₈alkoxy, unsubstituted C₁-C₁₈alkylamino, di(C₁-C₁₈alkyl)amino, hydroxy-substituted C₁-C₁₈alkylamino or hydroxy-substituted di(C₁-C₁₈alkyl)amino, -O-CH₂-CH₂-N(CH₃)₂ or -O-CH₂-CH₂-N⁺H(CH₃)₂ An⁻;
An⁻ is a anion of a monovalent organic or inorganic acid;
Me is a monovalent metal atom or the ammonium ion.
Z is oxygen or sulfur.

Examples for Rₐ as C₂-C₁₀₀alkoxy interrupted by at least one O atom are of formula 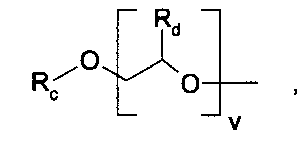 wherein R_{c} is C₁-C₂₅alkyl, phenyl or phenyl substituted by C₁-C₁₈alkyl, R_{d} is hydrogen or methyl and v is a number from 1 to 50. These monomers are for example derived from non ionic surfactants by acrylation of the corresponding alkoxylated alcohols or phenols. The repeating units may be derived from ethylene oxide, propylene oxide or mixtures of both.

Further examples of suitable acrylate or methacrylate monomers are given below. 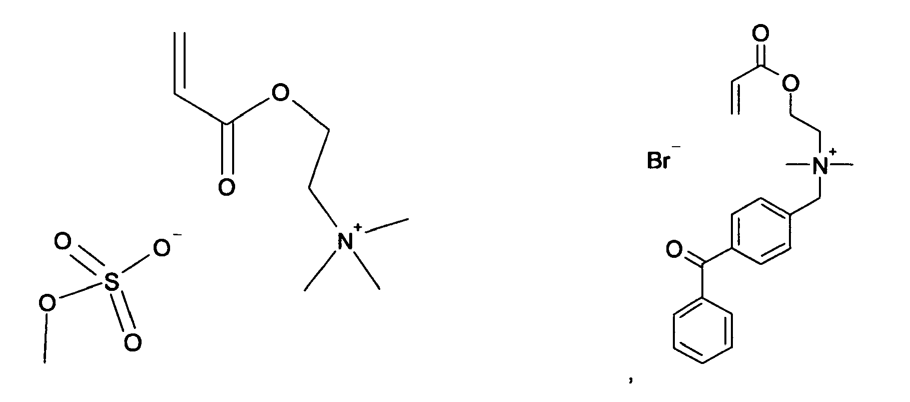 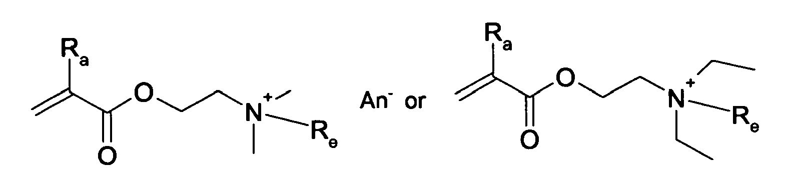 An⁻, wherein An⁻ and Rₐ have the meaning as defined above and Rₑ is methyl, benzyl or benzoylbenzyl. An⁻ is preferably Cl⁻, Br⁻ or ⁻O₃S-O-CH₃.

Further acrylate monomers are 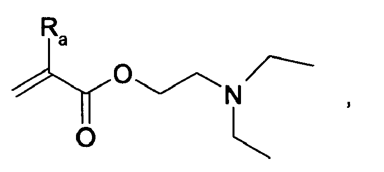 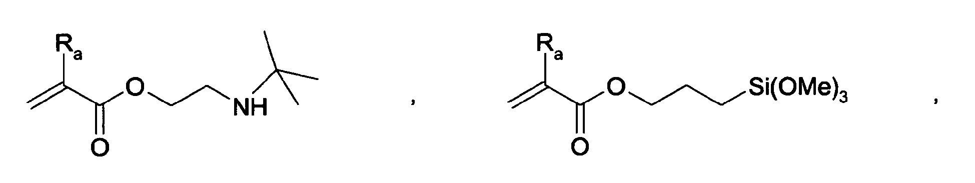 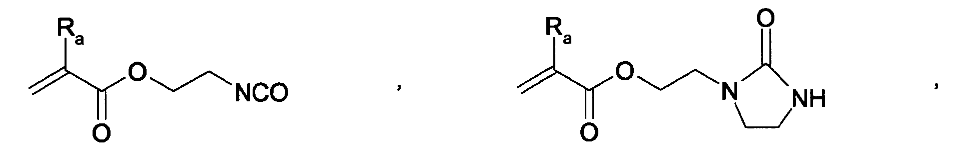 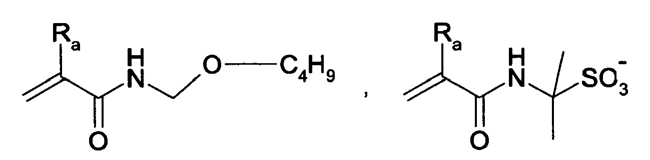 Me⁺ , Me⁺ is an alkali metal
cation or the ammonium cation.

Examples for suitable monomers other than acrylates are

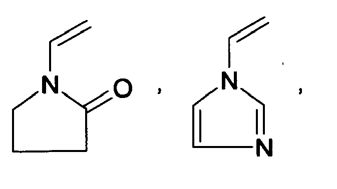

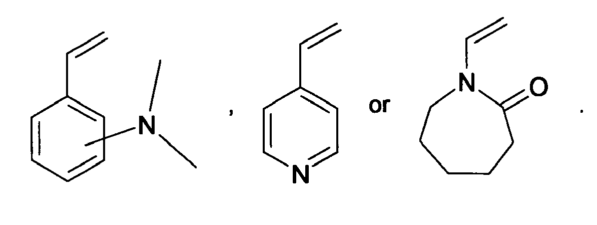

Preferably Rₐ is hydrogen or methyl, R_{b} is NH₂, gycidyl, unsubstituted or with hydroxy substituted C₁-C₄alkoxy, unsubstituted C₁-C₄alkylamino, di(C₁-C₄alkyl)amino, hydroxy-substituted C₁-C₄alkylamino or hydroxy-substituted di(C₁-C₄alkyl)amino;and Z is oxygen.

For example in the compound of formula R₁(X)ₙ R₁ is C₁-C₁₂alkyl, C₅-C₁₂cycloalkyl or phenyl;
X is OH,-COOH, -COCl, NH₂, -NHR, 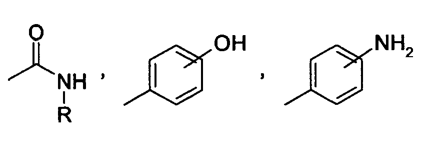 or 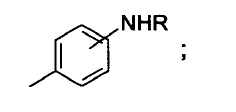 R is C₁-C₁₂alkyl and n is a number from 3-6.

Particularly useful are the following compounds R₁(X)ₙ: 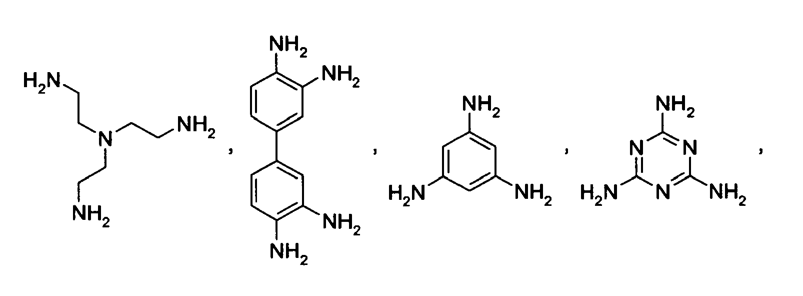 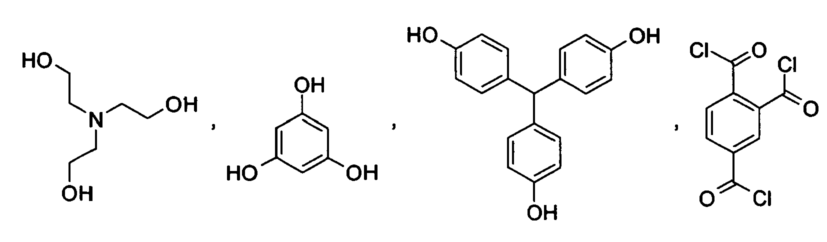 and

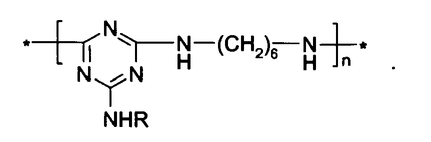

For example the reaction steps a2) and b1) are carried out at a temperature between 20° C and 120° C.

The coupling steps (a2, b1) between epoxy-functionalized NOR or epoxy-functionalized/NO-terminated-oligomer, cooligomer, polymer or copolymer and the multifunctional compound can be carried out in bulk or solution, containing 10-90% (by vol.) solvent. Suitable solvents include tetrahydrofurane, benzene, toluene, acetonitrile, dimethylformamide, chlorinated solvents and mixtures thereof.

Preferably the temperature of the coupling steps is between 50°C-120°C, more preferably between 60°C-110°C and most preferably between 70°C-100°C.

Preferably the coupling step is carried out at a temperature below the cleavage temperature of the NOR bond, where polymerization is initiated. This cleavage temperature depends on the structure of the selected NOR compound. For example the tetramethyl piperidines given in Table A can be processed at higher temperatures as compared to the dimethyl, diethyl substituted compound no. 104.

Typical reaction times range from 1-72 h, more preferably 1-48 h and most preferably from 3-24 h.

The reaction is usually carried out under atmospheric pressure.

The isolation of the star copolymer depends on its molecular structure. Residual monomers can be removed in vacuo at temperatures not exceeding 100°C. It is also possible to precipitate the polymer or to extract residual monomers with appropriate solvents.

Preferably the reaction steps a1) and b2) are carried out at a temperature between 80° and 160° C.

As already mentioned the alkoxyamine bond cleaves at elevated temperature and radical polymerization is initiated. Preferably the polymerization temperature is from 80° C to 140° C, in particular from 100° C to 140° C.

For example in step a1) the compound of formula I is present in an amount from 0.01 to 10 mol% based on the molar amount of the ethylenically unsaturated monomer.

For instance in step b2) the reaction product of step a2) is present in an amount from 0.01 to 10 mol% based on the molar amount of the ethylenically unsaturated monomer.

Typically the average weight molecular weight M_{w} of the star polymer or copolymer is from 1000 to 300 000, preferably from 3000 bis 100000.

The polydispersity index of the resulting comb or star copolymer is typically between 1.1 and 3.0.

Because the polymerizaton of step b) is a "quasi living" polymerization, it can be started and stopped practically at will. Furthermore, the polymer product retains the functional alkoxyamine group allowing a continuation of the polymerization in a living matter. Thus, in one embodiment of this invention, once the first monomer is consumed in the initial radical polymerizing step a second monomer can then be added to form a second block on the growing polymer chain in a second polymerization step. Therefore it is possible to carry out additional polymerizations with the same or different monomer(s) to prepare multi-block copolymers.

Furthermore, since this is a "quasi living" radical polymerization, blocks can be prepared in essentially any order. One is not necessarily restricted to preparing block copolymers where the sequential polymerizing steps must flow from the least stabilized polymer intermediate to the most stabilized polymer intermediate, such as is the case in ionic polymerization. Thus it is possible to prepare a multi-block copolymer in which a polyacrylonitrile or a poly(meth)-acrylate block is prepared first, then a styrene or butadiene block is attached thereto, and so on.

Random copolymers and tapered copolymer structures can be synthesized as well by using a mixture of monomers or adding a second monomer before the first one is completely consumed.

A star polymer or copolymer is obtainable in a method as described above.

It is also possible to use a star polymer or copolymer obtainable according to the method described above as crosslinking agent, ionomer, emulsifier, adhesive, surface modifier, surfactant or compatibilizer in thermoplastic, elastic or thermosetting polymers or as plastic material for extrusion or injection molding for shaping parts.

The following examples illustrate the invention.

General remarks:
Solvents and monomers are distilled over a Vigreux column under argon atmosphere or under vacuum, shortly before being used.

To remove oxygen all polymerization reaction mixtures are flushed before polymerization with argon and evacuated under vaccum applying a freeze-thaw cycle. The reaction mixtures are then polymerized under argon atmosphere.

At the start of the polymerization reaction, all starting materials are homogeneously dissolved.

Conversion is determined by removing unreacted monomers from the polymer by precipitation in methanol and/or by drying in vacuo (0.002 torr) at least 60 minutes, weighing the remaining polymer and subtract the weight of the initiator.
Characterization of the polymers is carried out by GPC (Gel Permeation Chromatography).

GPC: Is performed using RHEOS 4000 of FLUX INSTRUMENTS. Tetrahydrofurane (THF) is used as a solvent and is pumped at 1 ml/min. Two chromatography columns are put in series: type Plgel 5µm mixed-C of POLYMER INSTRUMENTS, Shropshire, UK. Measurements are performed at 40 °C. The columns are calibrated with low polydispersity polystyrenes having Mn from 200 to 2 000 000 Dalton. Detection is carried out using a RI-Detector ERC-7515A of ERCATECH AG at 30 °C.

1H-NMR is performed using a BRUKER AVANCE 200.

Compound 103 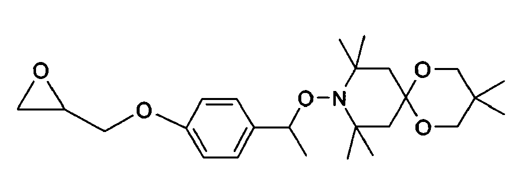 has been prepared according to WO 02/48109.

### Preparation of a star polymer with Polystyrene side arms

Two step rection:
1^{st} step: Synthesis of multifunctional initiator compound
2^{nd} step: CFRP with styrene to prepare a star polymer

### 1^{st} step: Reaction between tris(2-aminomethyl)amine and compound 103

In a dry, Argon-purged Schlenk tube equipped with a rubber septum, a magnetic stir bar and an Argon inlet, 0.618 g (0.00423 mol) tris(2-aminomethyl)amine and 5,502 g (0,01269 mol) compound 103 are dissolved in 15 ml dry toluene. The solution is heated at 90°C for 9 h. After cooling down at room temperature the solvent is removed in vacuo and the resulting compound is dried overnight in vacuo at 50°C until weight constant.

The multifunctional initiator compound A is obtained as slight yellow solid in quantitative yield

¹H-NMR: no further epoxy-groups in the spectra confirms the complete reaction of the epoxy-functionalized NOR with the triamine.

### 2^{nd} step: Reinitiation of multifunctional initiator compound A with styrene

In a dry, Argon-purged Schlenk tube equipped with a rubber septum, a magnetic stir bar and an Argon inlet, 2,5 g compound A is dissolved in 90 g (0,864 mol) styrene. The solution is heated at 130°C for 6 h. After cooling down at room temperature the residual monomer (styrene) is removed in vacuo and the resulting star polymer is dried overnight in vacuo at 50°C until constant weight.

The star polymer is obtained as white solid with a conversion of 55%.

| **Comp.** | **Conv. [%]** | **Mn** | **Mw** | **Mp** | **Mw/Mn** |
|---|---|---|---|---|---|
| Star polymer | 55 | 6500 | 12000 | 10300 | 1.8 |

## Claims

1. A method for the preparation of a star polymer or copolymer comprising
**a1)** polymerising in a first step an ethylenically unsaturated monomer in the presence of an initiator compound of formula (I) 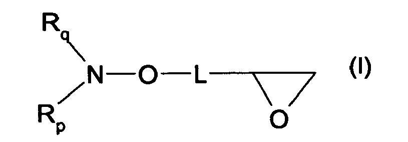
wherein L is a linking group selected from the group consisting of C₁-C₁₈alkylene, phenylene, phenylene-C₁-C₁₈alkylene, C₁-C₁₈alkylene-phenylene, C₁-C₁₈alkylene-phenylene-oxy and C₅-C₁₂cycloalkylene;
Rₚ and R_{q} are independently tertiary bound C₄-C₂₈alkyl groups which are unsubstituted or substitituted by one or more electron withdrawing groups or by phenyl; or
Rₚ and R_{q} together form a 5 or 6 membered heterocyclic ring which is substituted at least by 4 C₁-C₄alkyl groups and which may be interrupted by a further nitrogen or oxygen atom; and in a second step
**b1)** reacting the polymer obtained in step a) with a compound of formula R₁(X)ₙ , wherein
R₁ is C₁-C₂₄alkyl, C₅-C₁₂cycloalkyl, phenyl, naphthyl, C₇-C₁₅phenylalkyl or is the residue of a phosphor containing acid;
X is OH,-COOH, -COCl, NH₂, -NHR, 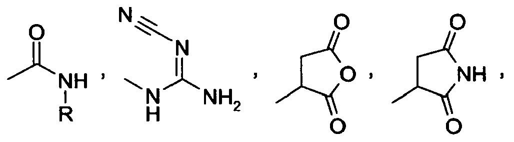 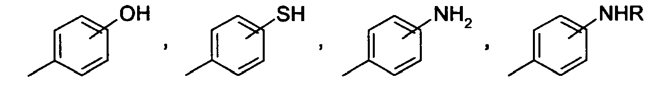 or
X is a radical derived from glycerol or from a polyvinylalcohol
R is C₁-C₂₄alkyl and n is a number from 3-10;
or
**a2)** reacting in a first step a compound of formula I with a compound of formula R(X)ₙ as defined above, and
**b2)** reacting the multifunctional initiator compound, obtained in step a2) with an ethylenically unsaturated monomer in a polymerization reaction.

2. A method according to claim 1 wherein the monomer is of formula (II) 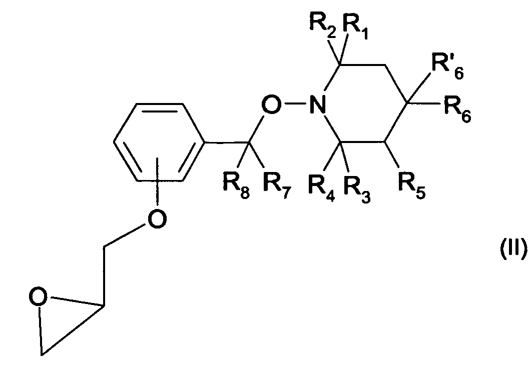 wherein
R₁, R₂, R₃ and R₄ are independently of each other C₁-C₄alkyl ;
R₅ is hydrogen or C₁-C₄alkyl;
R₆ is hydrogen and R₆ is H, OR₁₀, NR₁₀R₁₁, -O-C(O)-R₁₀ or NR₁₁-C(O)-R₁₀;
R₁₀ and R₁₁ independently are hydrogen, C₁-C₁₈alkyl, C₂-C₁₈alkenyl, C₂-C₁₈alkinyl or C₂-C₁₈alkyl which is substituted by at least one hydroxy group or, if R₆ is NR₁₀R₁₁, taken together, form a C₂-C₁₂alkylene bridge or a C₂-C₁₂-alkylene bridge interrupted by at least one O atom;or
R₆ and R'₆ together are both hydrogen, a group =O or =N-O-R₂₀ wherein
R₂₀ is H, straight or branched C₁-C₁₈alkyl, C₃-C₁₈alkenyl or C₃-C₁₈alkinyl, which may be unsubstituted or substitued, by one or more OH, C₁-C₈alkoxy, carboxy, C₁-C₈alkoxycarbonyl; C₅-C₁₂cycloalkyl or C₅-C₁₂cycloalkenyl;
phenyl, C₇-C₉phenylalkyl or naphthyl which may be unsubstituted or substituted by one or more C₁-C₈alkyl, halogen, OH, C₁-C₈alkoxy, carboxy, C₁-C₈alkoxycarbonyl;
-C(O)-C₁-C₃₆alkyl, or an acyl moiety of a α,β-unsaturated carboxylic acid having 3 to 5 carbon atoms or of an aromatic carboxylic acid having 7 to 15 carbon atoms;
-SO₃⁻Q⁺, -PO(O⁻Q⁺)₂, -P(O)(OR ₂)₂, -SO₂-R₂, -CO-NH-R₂, -CONH₂, COOR₂, or Si(Me)₃, wherein Q⁺ is H⁺, ammnonium or an alkali metal cation; or
R₆ and R'₆ are independently -O-C₁-C₁₂alkyl, -O-C₃-C₁₂alkenyl, -O-C₃-C₁₂alkinyl, -O-C₅-C₈cycloalkyl, -O-phenyl, -O-naphthyl, -O-C₇-C₉phenylalkyl; or
R₆ and R'₆ together form one of the bivalent groups -O-C(R₂₁)(R₂₂)-CH(R₂₃)-O-, -O-CH(R₂₁)-CH₂₂-C(R₂₂)(R₂₃)-O-, -O-CH(R₂₂)-CH₂-C(R₂₁)(R₂₃)-O-, -O-CH₂-C(R₂₁)(R₂₂)-CH(R₂₃)-O-, -O-o-phenylene-O-, -O-1,2-cyclohexyliden-O-,
-O-CH₂-CH=CH-CH₂-O- or 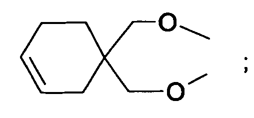 wherein
R₂₁ is hydrogen, C₁-C₁₂alkyl, COOH, COO-(C₁-C₁₂)alkyl or CH₂OR₂₄;
R₂₂ and R₂₃ are independently hydrogen, methyl ethyl, COOH or COO-(C₁-C₁₂)alkyl;
R₂₄ is hydrogen, C₁-C₁₂alkyl, benzyl, or a monovalent acyl residue derived from an aliphatic, cycloaliphatic or aromatic monocarboxylic acid having up to 18 carbon atoms; and
R₇ and R₈ are independently hydrogen or C₁-C₁₈alkyl.

3. A method according to claim 2 wherein R₁. R₂, R₃, R₄ are methyl, or R₁ and R₃ are ethyl and R₂ and R₄ are methyl, or R₁ and R₂ are ethyl and R₃ and R₄ are methyl.

4. A method according to claim 2 wherein R₅ is hydrogen or methyl.

5. A method according to claim 2 wherein
R'₆ is hydrogen and R₆ is H, OR₁₀, NR₁₀R₁₁, -O-C(O)-R₁₀ or NR₁₁-C(O)-R₁₀;
R₁₀ and R₁₁ independently are hydrogen, C₁-C₁₈alkyl, C₂-C₁₈alkenyl, C₂-C₁₈alkinyl or C₂-C₁₈alkyl which is substituted by at least one hydroxy group or, if R₆ is NR₁₀R₁₁, taken together, form a C₂-C₁₂alkylene bridge or a C₂-C₁₂-alkylene bridge interrupted by at least one O atom; or
R₆ and R₆ together are both hydrogen, a group =O or =N-O-R₂₀ wherein
R₂₀ is H or straight or branched C₁-C₁₈alkyl.

6. A method according to claim 2 wherein
R₆ and R'₆ together form one of the bivalent groups -O-C(R₂₁)(R₂₂)-CH(R₂₃)-O-, -O-CH(R₂₁)-CH₂₂-C(R₂₂)(R₂₃)-O-, -O-CH(R₂₂)-CH₂-C(R₂₁)(R₂₃)-O-, -O-CH₂-C(R₂₁)(R₂₂)-CH(R₂₃)-O- and R₂₁, R₂₂ and R₂₃ have the meaning as defined in claim 2.

7. A method according to claim 1 wherein the ethylenically unsaturated monomer or oligomer is selected from the group consisting of styrene, substituted styrene, conjugated dienes, vinyl acetate, vinylpyrrolidone, vinylimidazole, maleic anhydride, (alkyl)acrylic acidanhydrides, (alkyl)acrylic acid salts, (alky)acrylic esters, (meth)acrylonitriles, (alkyl)acrylamides, vinyl halides and vinylidene halides.

8. A method according to claim 7 wherein the ethylenically unsaturated monomers are styrene, methylacrylate, ethylacrylate, butylacrylate, isobutylacrylate, tert. butylacrylate, hydroxyethylacrylate, hydroxypropylacrylate, dimethylaminoethylacrylate, methyl(meth)acrylate, ethyl(meth)acrylate, butyl(meth)acrylate, hydroxyethyl(meth)acrylate, hydroxypropyl(meth)acrylate, dimethylaminoethyl(meth)aaylate, acrylonitrile, acrylamide, methacrylamide or dimethylaminopropyl-methacrylamide.

9. A method according to claim 1 wherein in the compound of formula R₁(X)ₙ R₁ is C₁-C₁₂alkyl, C₅-C₁₂cycloalkyl or phenyl;
X is OH,-COOH, -COCl, NH₂, -NHR, 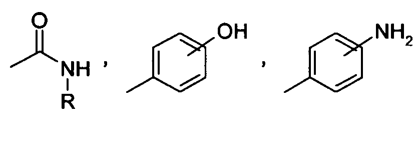 or 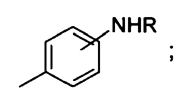
R is C₁-C₁₂alkyl and n is a number from 3-6.

10. A method according to claim 1 wherein the reaction steps a2) and b1) are carried out at a temperature between 20° C and 120° C.

11. A method according to claim 1 wherein the reaction steps a1) and b2) are carried out at a temperature between 80° and 160° C.

12. A method according to claim 1 wherein in step a1) the compound of formula I is present in an amount from 0.01 to 10 mol% based on the molar amount of the ethylenically unsaturated monomer.

13. A method according to claim 1 wherein in step b2) the reaction product of step a2) is present in an amount from 0.01 to 10 mol% based on the molar amount of the ethylenically unsaturated monomer.

## Patentansprüche

1. Verfahren zur Herstellung eines Sternpolymers oder Copolymers, bei dem man
a1) in einem ersten Schritt ein ethylenisch ungesättigtes Monomer in Gegenwart einer Initiatorverbindung der Formel (I) 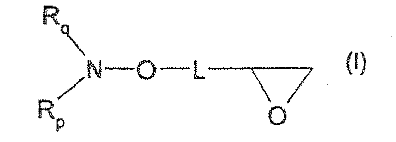
worin L für eine Brückengruppe aus der Gruppe bestehend aus C₁-C₁₈-Alkylen, Phenylen, Phenylen-C₁-C₁₈-alkylen, C₁-C₁₈-Alkylenphenylen, C₁-C₁₈-Alkylen-phenylenoxy und C₅-C₁₂-Cycloalkylen steht;
Rₚ und R_{q} unabhängig voneinander für tertiär gebundene C₄-C₂₈-Alkylgruppen stehen, die gegebenenfalls durch eine oder mehrere elektronenanziehende Gruppen oder Phenyl substituiert sind; oder
Rₚ und R_{q} zusammen einen 5- oder 6-gliedrigen heterocyclischen Ring bilden, der durch mindestens 4 C₁-C₄-Alkylgruppen substituiert ist und durch ein weiteres Stickstoff- oder Sauerstoffatom unterbrochen sein kann;
polymerisiert und in einem zweiten Schritt b1) das in Schritt a) erhaltene Polymer mit einer Verbindung der Formel R₁(X)ₙ, worin
R₁ für C₁-C₂₄-Alkyl, C₅-C₁₂-Cycloalkyl, Phenyl, Naphtyl, C₇-C₁₅-Phenylalkyl oder den Rest einer phosphorhaltigen Säure steht,
X für OH,-COOH, -COCl, NH₂, -NHR, 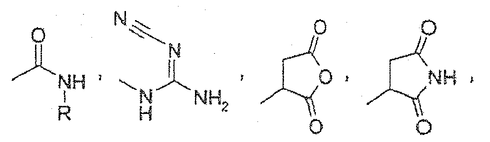 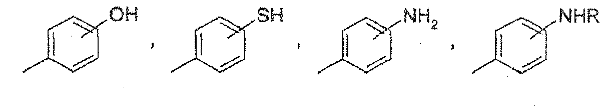 steht oder
X für einen von Glycerin oder einem Polyvinylalkohol abgeleiteten Rest steht;
R für C₁-C₂₄-Alkyl steht und n für eine Zahl von 3-10 steht;
umsetzt;
oder
a2) in einem ersten Schritt eine Verbindung der Formel I mit einer Verbindung der Formel R(X)ₙ gemäß obiger Definition umsetzt und
b2) die in Schritt a2) erhaltene multifunktionelle Initiatorverbindung in einer Polymerisationsreaktion mit einem ethylenisch ungesättigten Monomer umsetzt.

2. Verfahren nach Anspruch 1, wobei das Monomer die Formel (II) aufweist: 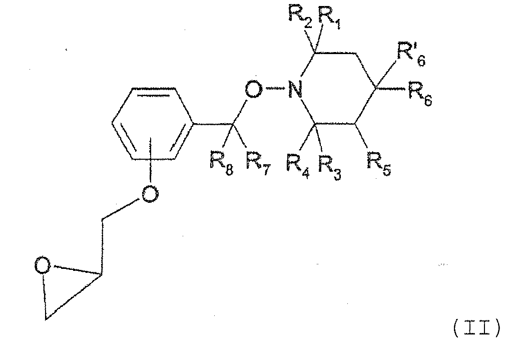 worin
R₁, R₂, R₃ und R₄ unabhängig voneinander für C₁₋₄-Alkyl stehen;
R₅ für Wasserstoff oder C₁₋₄-Alkyl steht;
R'₆ für Wasserstoff steht und R₆ für H, OR₁₀, NR₁₀R₁₁, -O-C(O)-R₁₀ oder NR₁₁-C(O)-R₁₀ steht;
R₁₀ und R₁₁ unabhängig voneinander für Wasserstoff, C₁-C₁₈-Alkyl, C₂-C₁₈-Alkenyl, C₂-C₁₈-Alkinyl oder C₂-C₁₈-Alkyl, das durch mindestens eine Hydroxygruppe substituiert ist, stehen oder dann, wenn R₆ für NR₁₀R₁₁ steht, zusammengenommen eine C₂-C₁₂-Alkylenbrücke oder eine durch mindestens ein O-Atom unterbrochene C₂-C₁₂-Alkylenbrücke bilden; oder
R₆ und R'₆ zusammen beide für Wasserstoff, eine Gruppe =O oder =N-O-R₂₀ stehen, worin R₂₀ H, gerades oder verzweigtes C₁-C₁₈-Alkyl, C₃-C₁₈-Alkenyl oder C₃-C₁₈-Alkinyl, das gegebenenfalls ein- oder mehrfach durch OH, C₁-C₈-Alkoxy, Carboxy, C₁-C₈-Alkoxycarbonyl, C₅-C₁₂-Cycloalkyl oder C₅-C₁₂-Cycloalkenyl substituiert sein kann;
Phenyl, C₇-C₉-Phenylalkyl oder Naphthyl, das gegebenenfalls ein- oder mehrfach durch C₁-C₈-Alkyl, Halogen, OH, C₁-C₈-Alkoxy, Carboxy oder C₁-C₈-Alkoxycarbonyl substituiert sein kann;
-C(O)-C₁-C₃₆-Alkyl oder eine Acylgruppierung einer α,β-ungesättigten Carbonsäure mit 3 bis 5 Kohlenstoffatomen oder einer aromatischen Carbonsäure mit 7 bis 15 Kohlenstoffatomen;
-SO₃⁻Q⁺, -PO(O⁻Q⁺)₂, -P(O)(OR₂)₂, -SO₂-R₂, -CO-NH-R₂, -CONH₂, COOR₂ oder Si(Me)₃, worin Q⁺ H⁺, Ammonium oder ein Alkalimetallkation bedeutet; bedeutet;
oder
R₆ und R'₆ unabhängig voneinander für -O-C₁-C₁₂-Alkyl, -O-C₃-C₁₂-Alkenyl, -O-C₃-C₁₂-Alkinyl, -O-C₅-C₈-Cycloalkyl, -O-Phenyl, -O-Naphthyl oder -O-C₇-C₉-Phenylalkyl stehen oder
R₆ und R'₆ zusammen eine der zweiwertigen Gruppen -O-C(R₂₁)(R₂₂)-CH(R₂₃)-O-, -O-CH(R₂₁)-CH₂-C(R₂₂)(R₂₃)-O-, -O-CH(R₂₂)-CH₂-C(R₂₁)(R₂₃)-O-, -O-CH₂-C(R₂₁)(R₂₂)-CH(R₂₃)-O-, -O-o-Phenylen-O-, -O-1,2-Cyclohexyliden-O-, -O-CH₂-CH=CH-CH₂-O- oder 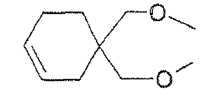 bilden; worin
R₂₁ Wasserstoff, C₁-C₁₂-Alkyl, COOH, COO-(C₁-C₁₂)-Alkyl oder CH₂OR₂₄ bedeutet;
R₂₂ und R₂₃ unabhängig voneinander Wasserstoff, Methyl, Ethyl, COOH oder COO-(C₁-C₁₂)-Alkyl bedeuten;
R₂₄ Wasserstoff, C₁-C₁₂-Alkyl, Benzyl oder einen einwertigen Alkylrest, der sich von einer aliphatischen, cycloaliphatischen oder aromatischen Monocarbonsäure mit bis zu 18 Kohlenstoffatomen ableitet, bedeutet; und
R₇ und R₈ unabhängig voneinander für Wasserstoff oder C₁-C₁₈-Alkyl stehen.

3. Verfahren nach Anspruch 2, bei dem R₁, R₂, R₃ und R₄ für Methyl stehen oder R₁ und R₃ für Ethyl stehen und R₂ und R₄ für Methyl stehen oder R₁ und R₂ für Ethyl stehen und R₃ und R₄ für Methyl stehen.

4. Verfahren nach Anspruch 2, worin R₃ für Wasserstoff oder Methyl steht.

5. Verfahren nach Anspruch 2, worin
R'₆ für Wasserstoff steht und R₆ für H, OR₁₀, NR₁₀R₁₁, -O-C(O)-R₁₀ oder NR₁₁-C(O)-R₁₀ steht;
R₁₀ und R₁₁ unabhängig voneinander für Wasserstoff, C₁-C₁₈-Alkyl, C₂-C₁₈-Alkenyl, C₂-C₁₈-Alkinyl oder C₂-C₁₈-Alkyl, das durch mindestens eine Hydroxygruppe substituiert ist, stehen oder dann, wenn R₆ für NR₁₀R₁₁ steht, zusammengenommen eine C₂-C₁₂-Alkylenbrücke oder eine durch mindestens ein O-Atom unterbrochene C₂-C₁₂-Alkylenbrücke bilden; oder
R₆ und R'₆ zusammen beide für Wasserstoff, eine Gruppe =0 oder =N-O-R₂₀ stehen, worin R₂₀ H oder gerades oder verzweigtes C₁-C₁₈-Alkyl bedeutet.

6. Verfahren nach Anspruch 2, bei dem R₆ und R'₆ zusammen eine der zweiwertigen Gruppen -O-C(R₂₁)(R₂₂)-CH(R₂₃)-O-, -O-CH(R₂₁)-CH₂-C(R₂₂)(R₂₃)-O-, -O-CH(R₂₂)-CH₂-C(R₂₁)(R₂₃)-O- oder -O-CH₂-C(R₂₁)(R₂₂)-CH(R₂₃)-O- bilden und R₂₁, R₂₂ und R₂₃ die in Anspruch 2 angegebene Bedeutung besitzen.

7. Verfahren nach Anspruch 1, bei dem man das ethylenisch ungesättigte Monomer oder Oligomer aus der Gruppe bestehend aus Styrol, substituiertem Styrol, konjugierten Dienen, Vinylacetat, Vinylpyrrolidon, Vinylimidazol, Maleinsäureanhydrid, (Alkyl)acrylsäureanhydriden, (Alkyl)acrylsäuresalzen, (Alkyl)acrylsäureestern, (Meth)acrylnitrilen, (Alkyl)acrylamiden, Vinylhalogeniden und Vinylidenhalogeniden auswählt.

8. Verfahren nach Anspruch 7, bei dem es sich bei den ethylenisch ungesättigten Monomeren um Styrol, Methylacrylat, Ethylacrylat, Butylacrylat, Isobutylacrylat, tert.-Butylacrylat, Hydroxyethylacrylat, Hydroxypropylacrylat, Dimethylaminoethylacrylat, Methyl(meth)acrylat, Ethyl(meth)acrylat, Butyl(meth)acrylat, Hydroxyethyl(meth)acrylat, Hydroxypropyl(meth)acrylat, Dimethylaminoethyl-(meth)acrylat, Acrylnitril, Acrylamid, Methacrylamid oder Dimethylaminopropylmethacrylamid handelt.

9. Verfahren nach Anspruch 1, bei dem in der Verbindung der Formel R₁(X)ₙ
R₁ für C₁-C₁₂-Alkyl, C₅-C₁₂-Cycloalkyl oder Phenyl steht;
X für OH, -COOH, -COCl, NH₂, -NHR, 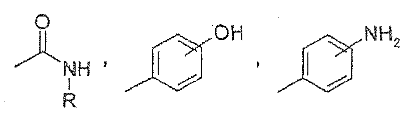 oder 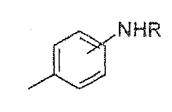 steht;
R für C₁-C₁₂-Alkyl steht und n für eine Zahl von 3-6 steht.

10. Verfahren nach Anspruch 1, bei dem man die Reaktionsschritte a2) und b1) bei einer Temperatur zwischen 20°C und 120°C durchführt.

11. Verfahren nach Anspruch 1, bei dem man die Reaktionsschritte a1) und b2) bei einer Temperatur zwischen 80°C und 160°C durchführt.

12. Verfahren nach Anspruch 1, bei dem in Schritt a1) die Verbindung der Formel I in einer Menge von 0,01 bis 10 Mol-%, bezogen auf die molare Menge des ethylenisch ungesättigten Monomers, vorliegt.

13. Verfahren nach Anspruch 1, bei dem in Schritt b2) das Reaktionsprodukt von Schritt a2) in einer Menge von 0,01 bis 10 Mol-%, bezogen auf die molare Menge des ethylenisch ungesättigten Monomers, vorliegt.

## Revendications

1. Méthode de préparation d'un polymère ou copolymère en étoile, comprenant
a1) la polymérisation dans une première étape d'un monomère éthyléniquement insaturé en présence d'un initiateur de formule (I) 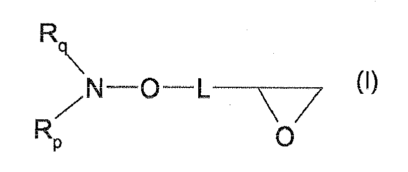
dans laquelle L est un groupement de liaison sélectionné dans le groupe constitue par C₁-C₁₈alkylène, phénylène, phénylène-C₁-C₁₈alkylène, C₁-C₁₈alkylène-phénylène, C₁-C₁₈alkylène-phénylène-oxy et C₅-C₁₂cyclo-alkylène ;
Rₚ et R_{q} sont indépendamment des groupements C₄-C₂₈alkyle liés tertiaires non substitués ou substitués par un ou plusieurs groupements électro-attracteurs ou par phényle ; ou
Rₚ et R_{q} forment ensemble un cycle hétérocyclique de 5 ou 6 chaînons qui est substitué au moins par quatre groupements C₁-C₄alkyle et qui peut être interrompu par un autre atome d'azote ou d'oxygène ; et dans une seconde étape
b1) la réaction du polymère obtenu à l'étape a) avec un composé de formule R₁(X)ₙ, dans laquelle R₁ est C₁-C₂₄alkyle, C₅-C₁₂cycloalkyle, phényle, naphtyle ou C₇-C₁₅phénylalkyle ou est le résidu d'un acide phosphoré ; X est OH, -COOH, -COCl, NH₂, -NHR, 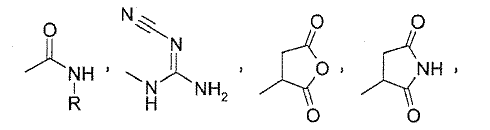 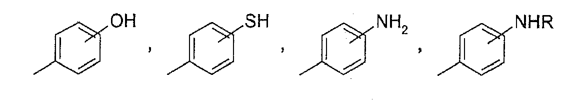 ou
X est un radical dérivé de glycérol ou d'un alcool polyvinylique ;
R est C₁-C₂₄alkyle et n est un nombre allant de 3 à 10 ; ou
a2) la réaction dans une première étape d'un composé de formule I avec un composé de formule R(X)ₙ telle que définie ci-dessus, et
b2) la réaction de l'initiateur multifonctionnel, obtenu à l'étape a2) avec un monomère éthyléniquement insaturé dans une réaction de polymérisation.

2. Méthode selon la revendication 1, dans laquelle le monomère répond à la formule (II) 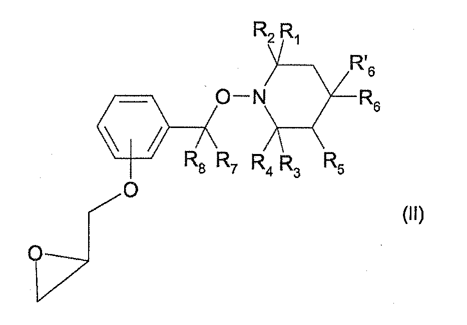 dans laquelle
R₁, R₂, R₃ et R₄ sont indépendamment les uns des autres C₁-C₄alkyle ;
R₅ est hydrogène ou C₁-C₄alkyle ;
R'₆ est hydrogène et R₆ est H, OR₁₀, NR₁₀R₁₁, -O-C(O)-R₁₀ ou NR₁₁-C(O)-R₁₀ ;
R₁₀ et R₁₁ sont indépendamment hydrogène, C₁-C₁₈alkyle, C₂-C₁₈alcényle, C₂-C₁₈alcynyle ou C₂-C₁₈alkyle qui est substitué par au moins un groupement hydroxy ou, si R₆ est NR₁₀R₁₁, pris ensemble, forment un pont C₂-C₁₂alkylène ou un pont C₂-C₁₂-alkylène interrompu par au moins un atome de 0 ; ou
R₆ et R'₆ sont conjointement tous deux hydrogène, un groupement =O ou =N-O-R₂₀ dans lequel
R₂₀ est H, C₁-C₁₈alkyle, C₃-C₁₈alcényle ou C₃-C₁₈alcynyle linéaire ou ramifié, pouvant être non substitué ou substitué par un ou plusieurs OH, C₁-C₈alcoxy, carboxy ou C₁-C₈alcoxycarbonyle ;
C₅-C₁₂cycloalkyle ou C₅-C₁₂cycloalcényle ;
phényle, C₇-C₉phénylalkyle ou naphtyle pouvant être non substitué ou substitué par un ou plusieurs C₁-C₈alkyle, halogène, OH, C₁-C₈alcoxy, carboxy ou C₁-C₈alcoxycarbonyle ;
-C(O)-C₁-C₃₆alkyle ou un motif acyle d'un acide carboxylique α,β-insaturé ayant 3 à 5 atomes de carbone ou d'un acide carboxylique aromatique ayant 7 à 15 atomes de carbone ;
-SO₃⁻Q⁺, -PO(O⁻Q⁺)₂, -P(O)(OR₂)₂, -SO₂-R₂, -CO-NH-R₂, -CONH₂, COOR₂, ou Si(Me)₃, où Q⁺ est H⁺, ammonium ou un cation de métal alcalin ; ou
R₆ et R₆' sont indépendamment -O-C₁-C₁₂alkyle, -O-C₃-C₁₂alcényle, -O-C₃-C₁₂alcynyle, -O-C₅-C₈cycloalkyle, -O-phényle, -O-naphtyle ou -O-C₇-C₉phénylalkyle ; ou
R₆ et R'₆ forment ensemble l'un parmi les groupements bivalents -O-C(R₂₁)(R₂₂)-CH(R₂₃)-O-, -O-CH(R₂₁)-CH₂-C(R₂₂)(R₂₃)-O-, -O-CH(R₂₂)-CH₂-C(R₂₁)(R₂₃)-O-, -O-CH₂-C(R₂₁)(R₂₂)-CH(R₂₃)-O-, -O-o-phénylène-O-, -O-1,2-cyclohexylidèn-O-, -O-CH₂-CH=CH-CH₂-O- ou 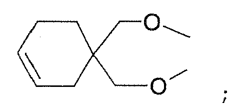 où
R₂₁ est hydrogène, C₁-C₁₂alkyle, COOH, COO-(C₁-C₁₂)alkyle ou CH₂OR₂₄ ;
R₂₂ et R₂₃ sont indépendamment hydrogène, méthyle, éthyle, COOH ou COO-(C₁-C₁₂)alkyle ;
R₂₄ est hydrogène, C₁-C₁₂alkyle, benzyle, ou un résidu acyle monovalent dérivé d'un acide monocarboxylique aliphatique, cycloaliphatique ou aromatique ayant jusqu'à 18 atomes de carbone ; et
R₇ et R₈ sont indépendamment hydrogène ou C₁-C₁₈alkyle.

3. Méthode selon la revendication 2 dans laquelle R₁, R₂, R₃, R₄ sont méthyle, ou R₁ et R₃ sont éthyle et R₂ et R₄ sont méthyle, ou R₁ et R₂ sont éthyle et R₃ et R₄ sont méthyle.

4. Méthode selon la revendication 2 dans laquelle R₅ est hydrogène ou méthyle.

5. Méthode selon la revendication 2 dans laquelle R'₆ est hydrogène et R₆ est H, OR₁₀, NR₁₀R₁₁, -O-C(O)-R₁₀ ou NR₁₁-C(O)-R₁₀ ;
R₁₀ et R₁₁ sont indépendamment hydrogène, C₁-C₁₈alkyle, C₂-C₁₈alcényle, C₂-C₁₈alcynyle ou C₂-C₁₈alkyle qui est substitué par au moins un groupement hydroxy ou, si R₆ est NR₁₀R₁₁, pris ensemble, forment un pont C₂-C₁₂alkylène ou un pont C₂-C₁₂-alkylène interrompu par au moins un atome de 0 ; ou
R₆ et R'₆ sont conjointement tous deux hydrogène, un groupement =0 ou =N-O-R₂₀ où
R₂₀ est H ou C₁-C₁₈alkyle linéaire ou ramifié.

6. Méthode selon la revendication 2 dans laquelle R₆ et R'₆ forment ensemble l'un parmi les groupements bivalents -O-C(R₂₁)(R₂₂)-CH(R₂₃)-O-, -O-CH(R₂₁)-CH₂-C(R₂₂)(R₂₃)-O-, -O-CH(R₂₂)-CH₂-C(R₂₁)(R₂₃)-O- ou -O-CH₂-C(R₂₁)(R₂₂)-CH(R₂₃)-O- et R₂₁, R₂₂ et R₂₃ ont les significations telles que définies selon la revendication 2.

7. Méthode selon la revendication 1, dans laquelle le monomère ou oligomère éthyléniquement insaturé est sélectionné dans le groupe constitué par le styrène, le styrène substitué, les diènes conjugués, l'acétate de vinyle, la vinylpyrrolidone, le vinylimidazole, l'anhydride maléique, les anhydrides d'acides (alkyl)acryliques, les sels d'acides (alkyl)acryliques, les esters (alkyl)acryliques, les (méth)acrylonitriles, les (alkyl)acrylamides, les halogénures de vinyle et les halogénures de vinylidène.

8. Méthode selon la revendication 7 dans laquelle les monomères éthyléniquement insaturés sont le styrène, l'acrylate de méthyle, l'acrylate d'éthyle, l'acrylate de butyle, l'acrylate d'isobutyle, l'acrylate de tertio-butyle, l'acrylate d'hydroxyéthyle, l'acrylate d'hydroxypropyle, l'acrylate de diméthylaminoéthyle, le (méth)acrylate de méthyle, le (méth)acrylate d'éthyle, le (méth)acrylate de butyle, le (méth)acrylate d`hydroxyétlïyle, le (méth)acrylate d'hydroxypropyle, le (méth)acrylate de diméthylaminoéthyle, l'acrylonitrile, l'acrylamide, le méthacrylamide ou le diméthylaminopropylméthacrylamide.

9. Méthode selon la revendication 1, dans laquelle dans le composé de formule R₁(X)ₙ, R₁ est C₁-C₁₂alkyle, C₅-C₁₂cycloalkyle ou phényle ;
X est OH, -COOH, -COCl, NH₂, -NHR, 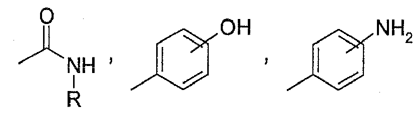 ou 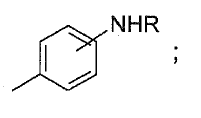
R est C₁-C₁₂alkyle et n est un nombre allant de 3 à 6.

10. Méthode selon la revendication 1, dans laquelle les étapes réactionnelles a2) et b1) sont effectuées à une température comprise entre 20°C et 120°C.

11. Méthode selon la revendication 1, dans laquelle les étapes réactionnelles a1) et b2) sont effectuées à une température comprise entre 80° et 160°C.

12. Méthode selon la revendication 1, dans laquelle à l'étape a1), le composé de formule I est présent en une quantité allant de 0,01 à 10% molaire par rapport à la quantité molaire du monomère éthyléniquement insaturé.

13. Méthode selon la revendication 1, dans laquelle à l'étape b2), le produit de réaction de l'étape a2) est présent en une quantité allant de 0,01 à 10% molaire par rapport à la quantité molaire du monomère éthyléniquement insaturé.
